# NEUE EUROPÄISCHE PATENTSCHRIFT

(11) **EP 1 843 122 B2**
(45) Veröffentlichungstag und Bekanntmachung des Hinweises auf die Entscheidung über den Einspruch: **19.02.2020**
(45) Hinweis auf die Patenterteilung: 25.08.2010
(21) Anmeldenummer: 07005733.6
(22) Anmeldetag: 21.03.2007
(51) Int. Cl.: F41G 1/38, F41G 1/18

(54) **Stellvorrichtung**
Adjustment device
Dispositif de réglage

(30) Priorität: 07.04.2006 DE 102006016834
(43) Veröffentlichungstag der Anmeldung: 10.10.2007
(73) Patentinhaber: SCHMIDT & BENDER GmbH & Co. KG, 35444 Biebertal (DE)
(72) Erfinder: Schäfer, Andreas, 35644 Hohenahr (DE)
(74) Vertreter: Patentanwälte Olbricht Buchhold Keulertz

(56) Entgegenhaltungen:
- CH-A- 399 251
- US-A1- 2007 137 089
- US-B1- 6 691 447
- Offenkundige Vorbenutzung von Zielfernrohren der ZF-T & Packschein von Kaps datiert auf den 13.3.2003 & Bilder zweier Zielfernrohe 'ZF Tactical' mit der Erläuterung 'Sonderserie exklusiv für IEA Import Export GmbH' & Rechnung/Lieferschein der IEA vom 2.8.2003 & eine schriftliche Bestätigung des Geschäftsführers der IEA & Video der Verwendung der Stellvorrichtung des Zielfernrohres der ZF-T Serie & Zum Beweis der offenkundigen Vorbenutzung werden die Zeugen Herrn Engelhardt und Ledertheil angeboten & Zielfernrohr der Serie ZF-T (ZF Tactical) & Konstruktionszeichnungen von Kaps & Rechnungen/Lieferscheine der Verkäufe der Fernrohre des Typs ZF-T aus der Zeit zwischen 23.04.2003 und 29.03.2005 & Visier, March 2003 (2003-03), page Titelseite, 6, 89, & Bilder des Zielfernrohres mit der Seriennummer '0101'.
- DWJ, no. 2, February 2004 (2004-02), pages Titelseite, 64-71,

## Beschreibung

Die Erfindung betrifft eine Stellvorrichtung gemäß Anspruch 1. Auch betrifft die Erfindung ein Zielfernrohr mit einer Stellvorrichtung gemäß Anspruch 12. Nicht zuletzt betrifft die Erfindung ein Verfahren zum Einstellen von Stellvorrichtungen gemäß Anspruch 13.

Ein Zielfernrohr mit einer gattungsgemäßen Stellvorrichtung ist aus dem Deutschen Waffen-Journal 2/Februar 2004 bekannt.

Derartige Einrichtungen finden bevorzugt Anwendung bei feinmechanischen Geräten wie optischen Instrumenten, Zielfernrohren und dergleichen. Beispielsweise ist in DE 297 20 737 U1 ein Zielfernrohr mit einem rohrförmigen Gehäuse beschrieben, das Tubusfassungen für ein Okular- und ein Objektivsystem aufweist Dabei sind in einem Mittelrohr ein optisches Umkehrsystem und ein diesem zugeordnetes Absehen vorhanden, das vorn am Doppelrohr in einer Fassung fest montiert ist. Außen sind in Umfangsabständen von 90° wenigstens zwei Verstelltürme befestigt, die einen Rastring oder eine Stellkappe haben. Ein mit Gewinde versehener Trieb ist im Rohrkörper schlitzgeführt und drückt gegen Federkraft vorn auf das Umkehrsystem; er ist in seiner Längsrichtung durch Drehen des Rastrings bzw. der Stellkappe vor und zurück bewegbar.

Herkömmlich hat ein derartiger, um insgesamt etwa 270° drehbarer Rastring eine feine Rastung solcher Aufteilung, dass er beim Drehen (Klickverstellen) jeweils einen Schritt weiterrückt, was die Treffpunktlage auf 100 m z.B. um 10 mm verändert. Auf dem Außenumfang des Verstellturms ist eine Skala aufgebracht, an der man die vorgenommene Korrektur ablesen kann. Je nach Teilung ist z.B. jeder zweite Klick mit einer weißen Linie markiert, während jeder zehnte Klick durch eine Zahl angegeben wird. Für Scharfschützen oder bei Schussweiten von bis zu 1.000 m bis 1.500 m ist eine solche Klickrastung zu grob, denn bei dieser Entfernung würde ein Klick einer Treffpunktversetzung von 150 mm bis 200 mm entsprechen.

Eine Verfeinerung der Rastteilung ist jedoch kaum möglich. Zum einen würde die wichtige Unterscheidung des Wechsels zwischen zwei Rastpositionen nicht mehr deutlich. Zum anderen fehlt es an Platz, um eine gut ablesbare Skala außen auf den Verstelltürmen anzubringen.

Der Drehbereich solcher Stellmittel kann zwar über eine volle Umdrehung hinausgehen, doch hat das in der Regel zur Folge, dass für die Benutzer nicht erkennbar ist, in welchem Einstellfeld oder Teilbereich die Mechanik gerade steht. Zum Beispiel lässt sich im Falle eines Zielfernrohr-Verstellturms ein Rastring mehrfach drehbar machen, wodurch die vorhandenen Einteilungen mehrfach nutzbar sind. Dann fehlt jedoch für den Schützen die Orientierung, in welchem Stellbereich er sich befindet. Ein weiterer Nachteil besteht darin, dass sich bei einigen Konstruktionen die Höhe der Verstelltürme verändert, was sich ungünstig auf die Handhabung auswirkt.

Bekannt ist aus dem Stand der Technik eine feinmechanische Stellvorrichtung in Form einer im Wesentlichen zylindrischen Baugruppe, bestehend aus einer auf einem Gewindestück gehalterten Stellkappe, die mit einem Fenster aufweisenden Deckel verschraubt ist, einem in der Stellkappe exzentrisch und achsparallel gelagerten Pendelzylinder, der stirnseitig eine Exzenteranordnung trägt, und einer zwischen dem Deckel und der Stellkappe gelagerten Anzeigentrommel, die bei Verdrehung der Stellkappe relativ zu einem in ihr umfangsnah geführten Stellbolzen - mittels Exzenteranordnung - drehverstellbar ist. Zur Darstellung der Einstellung weist diese Lösung eine Skala bzw. einen farblich markierten Bereich auf, welche(r) optisch anzeigt, wie die Einstellrichtung in Bezug auf eine anfängliche Position eingestellt bzw. verstellt ist.

Die US 6,691,447 B1 offenbart eine Justiervorrichtung zum Einstellen eines an die Justiervorrichtung gekoppelten Bauteils zur Justage einer Abseheneinrichtung eines Zielfernrohrs. Die beschriebene Justiervorrichtung umfasst einen drehbaren Einstellknopf zur Betätigung der Justiervorrichtung, sowie zwei mit einander gekoppelte Anzeigeskalen zur Anzeige des Ausmaßes eingestellten Justierung.

Die obengenannten Lösungen weisen jedoch den Nachteil auf, dass die passive, das heißt nicht aktiv beleuchtete optische Darstellung verschiedener Einstellung z.B. durch eine mehrfarbige Skala bei Dunkelheit nicht oder nur schwer für den Bediener ohne zusätzliche Beleuchtungsmittel optisch zu erfassen ist. Eine zusätzliche Beleuchtung soll und darf zum Teil bei bestimmten Einsatzzwecken nicht vorgesehen werden. Zudem dürfen auch keine weiteren, außer für den Bediener erkenn- und/oder spürbaren Mittel zur Kenntlichmachung der eingestellten Position der Stellvorrichtung vorgesehen werden.

Um bei Dunkelheit eine gezielte und überprüfbare Einstellung vorzunehmen, muss der Bediener somit die Anzahl der bei der Einstellung spürbaren Rastvorgänge bis zu einer gewünschten Einstellposition oder Fixierung der Stellvorrichtung haptisch oder senso-motorisch erfassen, das heißt, der Benutzer spürt jeden Einrastvorgang und kann anhand der Anzahl der Einrastvorgänge genau zuordnen, welche Einstellung zu der Anzahl an Einrastvorgängen gehört. Bei feiner Rasterung und damit verbunden einem großen Einstellbereich besteht die Gefahr, dass sich der Benutzer während der Einstellung verzählt und so eine genaue Einstellung nicht sicher gewährbar ist. Insbesondere bei Rasterungen, die keine Begrenzung auf die einmalige Verwendung des gesamten Rasterbereichs aufweisen, das heißt bei Rasterungen, die zur Einstellung mehrfach durchlaufen werden können, wie dies beispielsweise bei auf scheibenförmigen Elementen aufgebrachten Rasterungen der Fall ist, die nicht begrenzt sind, besteht die Gefahr, dass der Benutzer sich leicht aufgrund der hohen Anzahl an Einrastvorgängen verzählt.

Deshalb ist es eine wichtige Aufgabe der vorliegenden Erfindung, eine Stellvorrichtung zu schaffen, die bei großem Stellbereich eine zuverlässige und erleichterte Einstellung ermöglicht, die auch bei Dunkelheit für den Benutzer deutlich spürbar ist und so Fehleinstellungen vermeidet.

Diese Aufgabe wird gemäß einer Stellvorrichtung gemäß Anspruch 1 gelöst.

Weiter ist es eine Aufgabe der vorliegenden Erfindung, die Einstellung von Zielfernrohren bei Dunkelheit zu verbessern.

Diese Aufgabe wird durch ein Zielfernrohr gemäß Anspruch 12 gelöst.

Darüber hinaus ist es eine Aufgabe der vorliegenden Erfindung, ein Verfahren zur Einstellung einer Stellvorrichtung zu schaffen, bei der eine sichere und leicht reproduzierbare Einstellung auch bei Dunkelheit gewährleistet ist.

Diese Aufgabe wird durch ein Verfahren gemäß Anspruch 13 gelöst.

Die Erfindung schließt die technische Lehre ein, dass bei einer Stellvorrichtung zum Einstellen von an die Stellvorrichtung koppelbaren Bauteilen, insbesondere zum Verstellen einer Abseheneinrichtung eines Zielfernrohrs, umfasst sind: eine drehbar an einem Koppelteil gelagerte Stellkappeneinrichtung zur Betätigung der Stellvorrichtung,
wobei das Koppelteil ausgebildet ist, um die Bewegung der Stellkappeneinrichtung auf mit dem Koppelteil verbindbare Bauteile zwecks deren Einstellung zu übertragen, mit einer ersten, mit der Stellkappeneinrichtung gekoppelten Rasteinrichtung, die erste Rastmittel zur Bildung einer ersten Rasterung aufweist, Anzeigemittel zur Anzeige des Umfangs der Drehung der Stellkappeneinrichtung, und eine Schalteinrichtung zum Betätigen der Anzeigemittel nach einem vorbestimmten Ausmaß der Drehung der Stellkappeneinrichtung, wobei weiter eine zweite, mit der Stellkappeneinrichtung gekoppelte Rasteinrichtung mit einer von der ersten Rasterung unterschiedlichen, mittels zweiter Rastmittel gebildeten zweiten Rasterung vorgesehen ist.

Koppelbare Bauteile, an welche die Stellvorrichtung koppelbar ist, können insbesondere optische Visiereinrichtungen wie beispielsweise Zielfernrohre sein. Zur Kopplung der Stellvorrichtung an diese Bauteile ist ein Koppelteil vorgesehen. Das Koppelteil ist bevorzugt als Gewindestift ausgebildet. Jedoch kann auch jedes andere beliebige Teil als Koppelteil ausgebildet sein, welches eine rotatorische Bewegung einer Stellvorrichtung, welche mit dem Koppelteil zur dessen Bewegung gekoppelt ist, in eine Verstellbewegung transformiert. So kann das Koppelteil beispielsweise als Spindelteil und dergleichen ausgebildet werden.

Um die Stellvorrichtung zu betätigen, ist eine Stellkappeneinrichtung vorgesehen, welche drehbar an dem Koppelteil gelagert ist. Die Drehung der Stellkappeneinrichtung wird durch das Koppelteil an das einzustellende Bauteil übertragen. Um die Einstellung der Bauteile für den Benutzer zu erleichtern, ist die Stellkappeneinrichtung mit einer ersten Rasteinrichtung gekoppelt. Über diese Rasteinrichtung kann der Benutzer spüren, wenn ein Rastvorgang erfolgt. Jedem Rastvorgang lässt sich eine entsprechende Verstellung zuordnen. Insbesondere bei einer hohen Anzahl an Rastvorgängen, das heißt einem großen Einstellbereich, sind zur Sicherstellung der richtigen Einstellung Anzeigemittel vorgesehen, an denen erkennbar ist, wenn bei der Verstellung bzw. der Drehung der Einstellkappe ein vorbestimmter Drehbereich erreicht ist oder ein vorgegebener Drehpunkt erreicht ist. Es können beliebig viele Drehpunkte oder Drehbereiche definiert werden, in dem Rahmen, den die Geometrie der Anzeigemittel zulässt. Bevorzugt ist der Drehbereich so eingestellt, dass bei Durchlauf einer gewissen Anzahl an Rastvorgängen, ein erster Drehpunkt oder Schaltpunkt erreicht wird und dies angezeigt wird. Bevorzugt ist dies nach einem kompletten Durchlauf aller Rastvorgänge einer Rasteinrichtung vorgesehen, wenn ein weiterer Durchlauf der Rastvorgänge möglich ist. Somit lässt sich eine Rasterung mehrfach für die Einstellung nutzen.

Um zusätzlich eine Kontrollmöglichkeit für den Benutzer oder Bediener auch bei Dunkelheit zu gewährleisten, ist eine zweite Rasteinrichtung vorgesehen. Die Rasteinrichtungen weisen jeweils Rastmittel zur Bildung einer Rasterung auf. Die erste Rasteinrichtung weist erste Rastmittel zur Bildung einer ersten Rasterung auf und die zweite Rasteinrichtung weist zweite Rastmittel zur Bildung einer zweiten Rasterung auf. Die Rasterungen der ersten und der zweiten Rasteinrichtung sind dabei unterschiedlich ausgebildet. Bevorzugt ist die Rasterung der zweiten Rasteinrichtung größer oder gröber als die Rasterung er ersten Rasterung ausgebildet. Bei gleichzeitigem Einrasten von ersten Rastmitteln und zweiten Rastmitteln wird der Widerstand zum Ausrasten der Rastmittel aufgrund eines höheren Rastwiderstands erhöht, so dass dieses gleichzeitige oder nahezu gleichzeitige Einrasten in erste und zweite Rasterung deutlich für den Benutzer spürbar oder tastbar ist. Die Rastmittel können an verschiedenen Bauteilen oder an einem Bauteil ausgebildet werden. So ist es zum Beispiel möglich, die ersten und zweiten Rastmittel aneinander angeordnet auszubilden, so dass beispielsweise die Rastmittel als kleinere und größere Ausnehmungen bzw. Erhebungen ausgebildet sind. Bevorzugt ist jedoch, dass die Rastmittel an unterschiedlichen Bauteilen oder Stellen angeordnet sind. Durch die zweite, zusätzliche Rasteinrichtung ist es für den Benutzer einfacher, eine entsprechende Einstellung vorzunehmen, da er weniger Einrastvorgänge zählen muss, um die gleiche Einstellung vorzunehmen, als bei nur einer Rasteinrichtung.

Somit lässt sich über die bewegliche Anordnung relativ zu der Stellkappeneinrichtung auch bei Dunkelheit erkennen, welche Position das Anzeigemittel einnimmt. Somit wird dem Benutzer zusätzlich zu der ersten Rasteinrichtung ein Kontrollmittel gegeben, welches Fehleinstellungen bei Dunkelheit verringert.

Vorteilhafterweise schließt die vorliegende Erfindung die technische Lehre ein, dass bei einer Stellvorrichtung zum Einstellen von an die Stellvorrichtung koppelbaren Bauteilen, insbesondere zum Verstellen einer Abseheneinrichtung eines Zielfernrohrs, umfasst sind: eine drehbar an einem Koppelteil gelagerte Stellkappeneinrichtung zur Betätigung der Stellvorrichtung, wobei das Koppelteil ausgebildet ist, um die Bewegung der Stellkappeneinrichtung auf mit dem Koppelteil verbindbare Bauteile zwecks deren Einstellung zu übertragen, mit einer ersten, mit der Stellkappeneinrichtung gekoppelten Rasteinrichtung, die erste Rastmittel zur Bildung einer ersten Rasterung aufweist, Anzeigemittel zur Anzeige des Umfangs der Drehung der Stellkappeneinrichtung aufweist, und eine Schalteinrichtung zum Betätigen der Anzeigemittel nach einem vorbestimmten Umfang der Drehung der Stellkappeneinrichtung, wobei die Anzeigemittel relativ bewegbar zu der Stellkappeneinrichtung ausgebildet sind und so mit der Schalteinrichtung gekoppelt sind, dass bei einer ersten Schaltstellung der Schalteinrichtung das Anzeigemittel eine erste Position einnimmt und bei einer anderen Schaltstellung der Schalteinrichtung das Anzeigemittel eine andere, ertastbare Position einnimmt und wobei weiter eine zweite, mit der Stellkappeneinrichtung gekoppelte Rasteinrichtung mit einer von der ersten Rasterung unterschiedlichen, mittels zweiter Rastmittel gebildeten zweiten Rasterung vorgesehen ist.

Dadurch wird neben der zweiten Rasteinrichtung eine weitere Kontrollmöglichkeit für den Bediener vorgesehen, welche auch bei Dunkelheit Fehleinstellung vermeidet. Dabei sind die Kontrollmöglichkeiten bevorzugt auf kleinem Bauraum in der Stellvorrichtung integriert.

Erfindungsgemäß ist zudem, dass die zweite Rasteinrichtung ein erstes Rastelement und ein damit zusammenwirkendes, korrespondierendes zweites Rastelement umfasst, welche ausgebildet sind, um miteinander in Eingriff gebracht zu werden. Durch diese beiden Rastelemente ist eine zweiteilige Rasteinrichtung geschaffen, welche auf einfache Weise herstellbar ist und wenig Bauraum benötigt. Durch die zweigeteilte Ausführungsform lässt sich die Rasteinrichtung leicht einbauen, wobei auch ein nachträglicher Einbau realisierbar ist.

Eine bevorzugte Ausführungsform sieht vor, dass das erste Rastelelement eine Rastscheibe ist. Diese ist kleinbauend und bietet auf kleinstem Raum eine optimale Form.

Bevorzugt ist zudem, dass das zweite Rastelement eine Rasthülse ist. Die Rasthülse ist einfach herstellbar und gewährleistet insbesondere in Kombination mit der Rastscheibe eine hinsichtlich Bauraum, Verstellbarkeit und Genauigkeit optimierte Ausführungsform.

Eine bevorzugte Ausführungsform sieht vor, dass die Rastmittel des ersten Rastelements als Ausnehmung und/oder Erhebung und die Rastmittel des zweiten Rastelements als dazu korrespondierende, mit den ersten Rastmittel in Eingriff bringbare Erhebungen und/oder Ausnehmungen ausgebildet sind. Die Ausnehmungen können jede beliebige Form annehmen und sind insbesondere als Ausfräsung ausgebildet. Die korrespondierenden Erhebungen sind so ausgebildet, dass sie zumindest teilweise in die Ausnehmungen eingreifen und so einen erhöhten Widerstand nach dem Einrasten bei einer weiteren Bewegung gewährleisten.

Eine bevorzugte Ausführungsform sieht vor, dass die Rastmittel des zweiten Rastelements als kugelförmige Erhebungen ausgebildet sind und die Rastmittel des dazu korrespondierenden ersten Rastelements als kugelförmige Ausnehmungen ausgebildet sind. Auf diese Weise können die Rastelemente im nicht eingerasteten Zustand leicht auf einer mit den korrespondierenden Ausnehmungen ausgebildeten Gegenfläche gleiten, da die Kugel hinsichtlich der Kontaktfläche eine optimale Form aufweist. Zudem lässt sich über die Kugelgeometrie optimal die Einrastkraft für das Einrasten und "Entrasten", d.h. für das Lösen des Einrastens der Kugel, definieren. Die kugelförmige Erhebung greift beim Einrasten in die korrespondierende kugelförmige Ausnehmung ein.

Bevorzugt ist, dass der Durchmesser der kugelförmigen Erhebung größer ist als der Durchmesser der kugelförmigen Ausnehmung. Hierdurch ist gewährleistet, dass die Kugel nicht komplett durch die kugelförmige Ausnehmung beim Einrasten verfährt, sondern maximal zur Hälfte des Durchmessers in die Ausnehmung verfährt. Über das Durchmesser-Maß lässt sich die Kraft definieren, die notwendig ist, die Erhebung wieder aus der Einrastposition weg zu bewegen. Ein geringer Unterschied hinsichtlich der Durchmesser von Ausnehmung und Erhebung realisiert eine Lösung, bei der eine geringere Kraft benötigt wird, um die "Entrastung" zu bewirken, wohingegen ein größerer Unterschied der Durchmesser eine größere Kraft erfordert.

Weiter bevorzugt ist, dass das Verhältnis der ersten Rasterung zu der zweiten Rasterung ausgewählt ist aus der Gruppe umfassen die Verhältnisse: 1:2, 1:5, 1:10, 1:20, 1:25, 1:50, 1:100, 1:125, 1:150, 1:200, 1:250, 1:500, 1:750, 1:1000, 1:1250, 1:1500, 1:2000, 1:2500, 1:5000, 1:7500, 1:10000. Hiermit lassen sich für den Bediener gängige und leicht umrechenbare Skalierungen bereitstellen, so dass eine einfache Bedienung gewährleistet ist. Neben diesen aufgeführten Skalierungen sind natürlich beliebig vorbestimmbare Skalierungen bzw. "Rastabstände" der Rastmittel gewährleisten.

Daneben ist bevorzugt, dass die zweite Rasteinrichtung weiter mindestens ein Vorspannelement umfasst, um die Rastelemente gegeneinander vorzuspannen. Über diese Vorspannung lässt sich die Kraft für das Bewegen der Rastelemente zueinander einstellen. Eine höhere Vorspannung bewirkt eine schwergängigere Verschiebung der Rastelemente zueinander. Durch eine größere Vorspannung wird die Kraft, die für die Entrastung benötigt wird, deutlich erhöht.

Die Erfindung sieht vor, dass die zweite Rasteinrichtung zwei mit entgegengesetzt wirkenden Vorspannkräften ausgebildete Vorspannelement umfasst, um die Rastelement gegeneinander vorzuspannen. Über das zweite Vorspannelement lässt sich noch präziser die Kraft zur Einstellung der Rasteinrichtung festlegen. So können die Vorspannelemente in entgegengesetzte Richtungen wirken, so dass sich die Vorspannkräfte zumindest teilweise gegeneinander aufheben.

Weiter ist vorgesehen, dass die Vorspannelemente mit unterschiedlichen Vorspannkräften ausgebildet sind. Auf diese Weise wird vermieden, dass bei entgegengesetzt wirkenden Vorspannelementen eine Aufhebung der Vorspannkräfte bewirkt wird. Es ist zudem vorgesehen, dass die zweite Rasteinrichtung weiter ein in und/oder entgegengesetzt einer Wirkrichtung des Vorspannelements verschiebbares Koppelstück aufweist, das zwischen einem Rastelement und der Stellkappeneinrichtung angeordnet ist. Über dieses Koppelstück lassen sich die Vorspannelemente zueinander ausrichten bzw. justieren. Falls nur ein Vorspannelement vorgesehen ist, kann das Koppelstück als Platzfüller für das nicht vorgesehene Vorspannelement dienen, so dass nicht die gesamte Stellvorrichtung neu konzipiert und aufgebaut werden muss, sondern sich die gleichen Bauteile (mit Ausnahme des Koppelstücks) sowohl für die Stellvorrichtung mit einem Vorspannelement als auch mit zwei oder mehr Vorspannelementen verwenden lässt.

Die Vorspannelemente sind bevorzugt als Federelemente insbesondere Druckfederelemente ausgebildet.

Es ist bevorzugt, dass das Vorspannelement mit der größeren Vorspannungskraft zwischen Koppelstück und dem dazu benachbarten Rastelement angeordnet ist. Hierdurch wird die Wirkrichtung der Vorspannung festgelegt. Durch diese Anordnung wirkt die Vorspannung bzw. die damit verbundene Vorspannkraft von dem Koppelstück in Richtung der Vorspannelemente.

Um dem Benutzer die Bedienung der Stellvorrichtung zu erleichtern, sind Anzeigemittel zur Anzeige der gewählten Einstellung vorgesehen. Bevorzugt ist dabei, dass die Anzeigemittel ein ringförmiges Element mit einer zentralen Durchgangsbohrung umfassen. Dieses ringförmige Element ist hinsichtlich Gewicht und Bauraum optimal für den Einsatz in der Stellvorrichtung ausgebildet. Markierungen für die Anzeige können bevorzugt an der Umfangsfläche angeordnet werden.

Zur Anordnung des ringförmigen Elements an oder in der Stellvorrichtung ist bevorzugt vorgesehen, dass die Stellkappeneinrichtung eine ringförmige Ausnehmung aufweist, in der das ringförmige Element zumindest teilweise aufgenommen ist. Auf diese Weise ist das ringförmige Element geführt und um eine Achse drehbar in der Stellkappeneinrichtung aufgenommen.

Eine vorteilhafte Ausführungsform sieht vor, dass das ringförmige Element eine äußere, axial von der Stellkappeneinrichtung wegweisende erste Oberfläche aufweist und die Stellkappeneinrichtung eine zumindest von der ringförmigen Ausnehmung umgebende zu der Oberfläche der Stellkappeneinrichtung weisende zweite Oberfläche aufweist, wobei der Versatz der beiden Oberflächen bei der Relativbewegung des ringförmigen Elements zu der Stellkappeneinrichtung ein spürbares Maß des Umfangs der Drehung bildet. Diese beiden Oberflächen können somit relativ zueinander bewegt werden. Diese Bewegung ist an die Bewegung der Stellkappeneinrichtung gekoppelt, so dass je nach Betätigung oder Verstellposition der Stellkappeneinrichtung die Oberflächen relativ zueinander bewegt werden.

Insbesondere ist vorgesehen, dass der Versatz in dem Bereich von dem negativen Wert der Breite des ringförmigen Elements bis zum positiven Wert der Breite des ringförmigen Elements liegt. Somit wird der gesamte Versatz der Oberflächen zueinander durch die Breite des Rings oder ringförmigen Elements bestimmt. Die Breite ist das Abmaß in axialer Richtung des Rings. In dem vorstehend aufgeführten Bereich kann der Versatz jeden Wert annehmen bzw. betragen. Dabei kann der Versatz sowohl stufenweise als auch kontinuierlich in dem vorgegebenen Bereich Werte annehmen.

Der Versatz kann insbesondere bevorzugte Positionen einnehmen. Die bevorzugten Positionen sind komplett eingefahren, komplett ausgefahren und etwa in der Mitte angeordnet. Bevorzugt ist, dass die erste Position des Anzeigemittels eine Position ist, in der der Versatz etwa null beträgt. Hierbei schließen die beiden Oberflächen - die der Stellkappeneinrichtung und die des ringförmigen Elements - bündig miteinander ab. Diese Position lässt sich entsprechend leicht auch bei Dunkelheit erkennen, in dem der Bediener den Versatz abtastet.

Die andere Position kann jede andere Position sein, wobei der Versatz hierbei ungleich null, das heißt von der bündigen Position abweichend ist. Hierdurch lässt sich für den Bediener eine Verstellung von der Null-Stellung problemlos ertasten.

Besonders bevorzugt ist, dass die andere Position mehr als eine Position umfasst, wobei der Versatz bei jeder Position verschieden von den anderen Positionen ist. Hierdurch lassen sich insbesondere die drei bevorzugten Positionen realisieren.

Diese Positionen und somit der Versatz können, wie zuvor aufgeführt, bevorzugt gemäß einer diskreten Verteilung ausgebildet sind. Das heißt, die Positionen wechseln sprunghaft von Position zu Position. Somit sind nur bevorzugte Positionen für den Bediener abtastbar.

Daneben ist bevorzugt, dass die Positionen und somit der Versatz gemäß einer stetigen Verteilung ausgebildet sind. Hierbei verändert sich die Position gleichmäßig mit jeder Bewegung der Stellkappeneinrichtung, so dass jede Änderung direkt übermittelt wird.

Die technische Lehre der Erfindung sieht weiter einen Nachrüstbausatz zum Nachrüsten von Stellvorrichtungen zum Einstellen von an die Stellvorrichtung koppelbaren Bauteilen, insbesondere zum Verstellen einer Abseheneinrichtung eines Zielfernrohrs vor, umfassend: eine zweite erfindungsgemäße Rasteinrichtung und/oder erfindungsgemäße Anzeigemittel. Mit dieser Lösung lassen sich bestehende Stellvorrichtungen auf einfache Weise nachrüsten und insbesondere lassen sich die erfindungsgemäßen Merkmale hierdurch realisieren.

Die technische Lehre sieht weiter vor, dass ein Zielfernrohr mit einer erfindungsgemäßen Stellvorrichtung vorgesehen ist, mit einem Rohrgehäuse, das Tubusfassungen für ein Okular- und ein Objektivsystem sowie ein optisches Umkehrsystem und ein in diesem zugeordnetes Absehen aufweist. Das Zielfernrohr lässt sich über die Stellvorrichtung je nach Umgebungsbedingungen entsprechend einstellen, so dass ein durch das Zielfernrohr anvisiertes Objekt entsprechend sicher und optimal fokussiert werden kann. Dieses kann mit der erfindungsgemäßen Stellvorrichtung schnell und geräuschlos erfolgen, wobei dies insbesondere auch bei Dunkelheit möglich ist.

Zudem umfasst die technische Lehre der vorliegenden Erfindung, dass ein Abschusssystem mit einer Abschussvorrichtung und einem erfindungsgemäßen Zielfernrohr vorgesehen ist. Diese Abschussvorrichtung kann beliebig ausgebildet sein und kann von medizinischen Vorrichtungen, welche Strahlen, insbesondere auch Licht- und/oder Laserstrahlen oder Strahlung zur Behandlung "abschießen" oder emittieren bis hin zu militärischen Feuerwaffen reichen. Unter "Abschuss" oder "Abschießen" wird dabei jegliches Aussenden von Signalen wie Licht, Teilchen, Informationen und dergleichen verstanden.

Zudem umfasst die technische Lehre der Erfindung ein Verfahren zum Einstellen von an eine erfindungsgemäße Stellvorrichtung gekoppelte Bauteile über die Stellvorrichtung, die Schritte: Feineinstellen der Stellvorrichtung anhand des ertastbaren Feedbacks der ersten Rasteinrichtung, Grobeinstellen der Stellvorrichtung anhand des ertastbaren Feedbacks der zweiten Rasteinrichtung, wobei die Schritte auch in umgekehrter Reihenfolge und/oder zeitgleich durchgeführt werden können. Hiermit lässt sich eine sichere und schelle Einstellung auch über große Verstellbereiche selbst bei Dunkelheit oder schlechten Sichtverhältnissen realisieren. Durch die ertastbaren Anzeigemittel kann der Bediener bevorzugt nur durch ertasten oder haptisch.

Bevorzugt umfasst das Verfahren weiter den Schritt: Überprüfen der Position der Stellvorrichtung anhand von erfindungsgemäßen Anzeigemitteln, wobei das Überprüfen jederzeit während des Verfahrens durchgeführt werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Vorderansicht einer erfindungsgemäßen Stellvorrichtung mit einem Anzeigeelement, welches einen Versatz > null aufweist;
- Fig. 2: einen Längsquerschnitt durch eine Stellvorrichtung mit einem Versatz von etwa null,
- Fig. 3: den Längsquerschnitt gemäß Fig. 2 mit einem Versatz > null,
- Fig. 4: einen Längsschnitt durch eine erfindungsgemäße Stellvorrichtung mit einem Versatz von etwa null,
- Fig. 5: den Längsschnitt gemäß Fig. 4 mit einem Versatz > null,
- Fig. 6: einen Längsschnitt durch eine weitere Stellvorrichtung mit einem Versatz von etwa null,
- Fig. 7: den Längsschnitt gemäß Fig. 6 mit einem Versatz von > null.

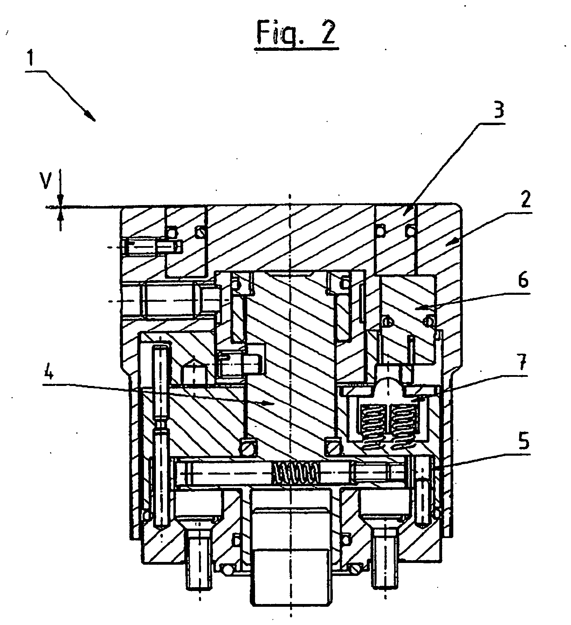

Die Fig. 2, 3, 6 und 7 dienen nur der Veranschaulichung.

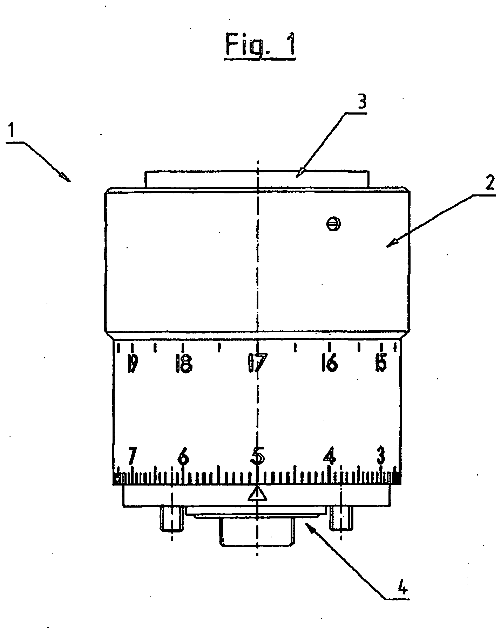

Fig. 1 zeigt eine erfindungsgemäße Stellvorrichtung 1. Die Stellvorrichtung 1 umfasst eine Stellkappeneinrichtung 2, welche zur Betätigung der Stellvorrichtung 1 dient. An der Stellkappeneinrichtung 2 sind zwei Skalenringe zur genauen Einstellung der Stellvorrichtung 1 vorgesehen. Zur Anzeige nach welchem Skalenring gerade eine Einstellung der Stellvorrichtung 1 vorgenommen wird, umfasst die Stellvorrichtung 1 weiter Anzeigemittel 3, welche als relativ zu der Stellkappeneinrichtung 2 bewegbares Element ausgebildet sind und oben aus der Stellkappeneinrichtung 2 hervorragen können, oder in die Stellkappeneinrichtung 2 versenkbar sind. Dargestellt ist das Anzeigemittel 3 in einer ausgefahrenen Position, so dass deutlich ist, dass der obere Skalenring zur Einstellung der Stellvorrichtung 1 verwendet wird.

Unten aus der Stellkappeneinrichtung 2 ragt ein Koppelteil 4 hervor, welches zum Koppeln der Stellvorrichtung 1 an weitere Bauteile wie zum Beispiel Zielfernrohre und dergleichen dient. Die Stellkappeneinrichtung 2 ist drehbar mit dem Koppelteil 4 gekoppelt bzw. verbunden. Über das Koppelteil 4 ist somit eine Übertragung der Bewegung der Stellkappeneinrichtung 2 auf angekoppelte Bauteile realisierbar. Der Aufbau der Stellkappeneinrichtung 2 wird anhand der Fig. 2 deutlich.

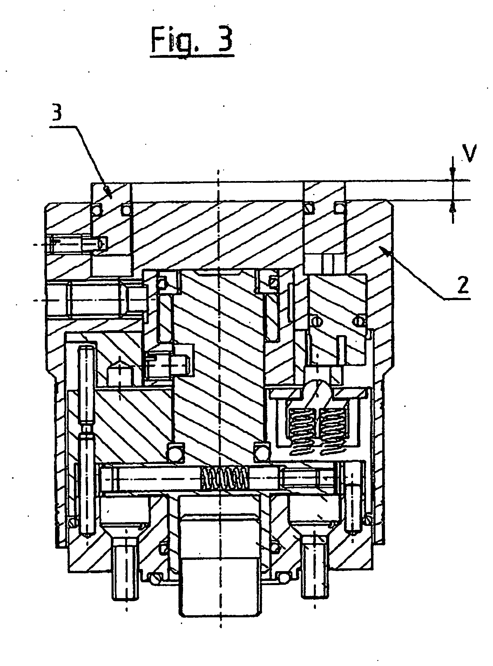

Fig. 2 zeigt in einem Längsschnitt die eine Stellvorrichtung 1. Die Stellvorrichtung 1 umfasst neben der Stellkappeneinrichtung 2, dem Anzeigemittel 3, dem Koppelteil 4 weiter eine erste Rasteinrichtung 5, welche mit der Stellkappeneinrichtung 2 gekoppelt ist, eine Schalteinrichtung 6 und eine zweite Rasteinrichtung 7. Die erste Rasteinrichtung 5 rastete bei jeder Skalenunterteilung gemäß einem der Skalenringe aus Fig. 1 entsprechend ein und ermöglicht so ein Feedback an den Bediener, wenn er eine Position gemäß dem Skalenring eingestellt hat. Die zweite Rasteinrichtung 7, die im Prinzip analog zu der ersten Rasteinrichtung 5 funktioniert, umfasst eine Rastscheibe, welche mit der Stellkappeneinrichtung 2 gekoppelt verstellbar ist. Diese Rastscheibe lässt sich somit in Umfangsrichtung drehen oder verstellen. Um nicht auf eine Umdrehung begrenzt zu sein, lässt sich die Rastscheibe beliebig oft um die eigene Achse drehen und somit theoretische eine Einstellung gemäß einem endlosen Bereich vornehmen. Um den Einstellbereich zu begrenzen, weist die Stellvorrichtung 1 weiter eine Schalteinrichtung 6 auf, welche in dem vorliegenden Fall die Anzahl der Umdrehungen auf zwei Umdrehungen begrenzt. Die Schalteinrichtung 6 ist dabei so mit dem Anzeigemittel 3 gekoppelt, dass etwa bei einer vollen Umdrehung oder je nach Einstellung nach Erreichen einer Schaltposition, das Anzeigemittel 3 entsprechend bewegt wird und so das Erreichen der Schaltposition anzeigt. Hierbei fährt das Anzeigemittel 3 dann relativ zu der Stellkappeneinrichtung 2 aus oder ein. Dargestellt ist die Position, in dem der Versatz V zwischen den äußeren Oberflächen der Anzeigemittel 3 und der Stellkappeneinrichtung 2 beträgt. In Fig. 3 ist ein positiver Versatz V dargestellt.

Wie zuvor aufgeführt, umfasst die Stellvorrichtung 1 eine zweite Rasteinrichtung 7. Diese ist ebenfalls an die Stellkappeneinrichtung 2 gekoppelt, weist aber im Gegensatz zu der ersten Rasteinrichtung 5 eine andere Rasterung auf, so dass beispielsweise nur bei jedem fünfen Einrasten der ersten Rasteinrichtung 5 auch ein Einrasten der zweiten Rasteinrichtung 7 durchgeführt wird. Diese zweite Rasteinrichtung 7 ist so als Grob- oder Hilfsrasteinrichtung ausgebildet, welche eine schnellere Grobeinrichtung gewährleistet.

Fig. 3 zeigt den Längsschnitt gemäß Fig. 2 mit einem positiven Versatz V. Hierbei ist das Anzeigemittel 3 gegenüber der Stellkappeneinrichtung 2 in einer ausgefahrenen Position dargestellt.

Die Funktionsweise ist die Folgende:
Bei einem ersten Ausführungsbeispiel ist an der Unterseite der Stellkappeneinrichtung 2 eine Rastscheibe ausgebildet. Diese Rastscheibe ist mit einer vorbestimmten Anzahl an Bohrungen in einem vorgegebenen Abstand zueinander ausgebildet. Korrespondierend dazu befindet sich benachbart eine Rasthülse. Der obere Bereich der Rasthülse ist genauso wie der untere Bereich der Rasthülse zylindrisch mit einem entsprechenden Außendurchmesser ausgebildet. Die Oberseite der Rasthülse weist kugelförmige Erhebung oder eine Kugelfläche auf. Durch eine Druckfeder oder mehrere Druckfedern wird die Rasthülse nach oben gegen die Rastscheibe gedrückt. Wird nun die Stellkappeneinrichtung 2 und somit die Rastscheibe verstellt bzw. verdreht, so dass eine der Bohrungen der Rastscheibe genau über der Rasthülse bzw. deren kugelförmiger Erhebung zu liegen kommt, "klickt" die kugelförmige Erhebung in die Bohrung der Rastscheibe ein. Dieser "Klick" oder dieses Einrasten ist deutlicher fühlbar, als die Einrastungen der ersten Rasteinrichtung 5. Der Außendurchmesser im oberen Bereich der Rasthülse sowie der Kugeldurchmesser der kugelförmigen Erhebung sind größer dimensioniert als der Innendurchmesser der Bohrungen der Rastscheibe, so dass sich nur ein Teil der kugelförmigen Oberseite der Rasthülse in die korrespondierende Bohrung setzen kann. Um nun die Stellkappeneinrichtung 2 weiter zu drehen, muss diese mit einem erhöhten Kraftaufwand als bei einem Einrasten der ersten Rasteinrichtung 5 weitergedreht werden, da die Rasthülse hierbei gegen die Druckfedern nach unten geschoben wird. Wird die Stellkappeneinrichtung 2 weitergedreht und eine weitere Rasterung erreicht und die Rastmittel zur Deckung gebracht, so wiederholt sich der Vorgang.

Die Stellkappeneinrichtung 2 bleibt hierbei stets in der unteren, vorbestimmten Position.

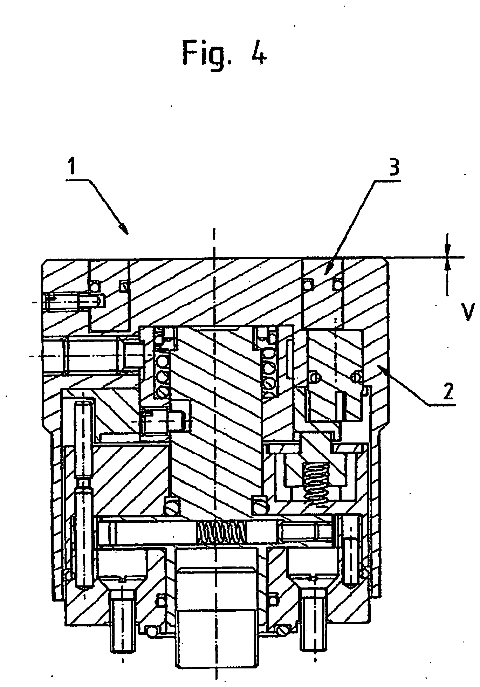

Fig. 4 zeigt die erfindungsgemäße Stellvorrichtung 1 in einem Längsschnitt. Die Stellvorrichtung 1 unterscheidet sich von der Stellvorrichtung 1 gemäß Fig. 2 und 3 dadurch, dass die zweite Rasteinrichtung 7 unterschiedlich ausgebildet ist. Bei einem Einrasten bewegt sich die Stellkappeneinrichtung 2 und ist nur durch entsprechende Gegenbewegung aus der arretierten Position wieder zu lösen. Die genaue Funktionsweise ist weiter unten beschrieben.

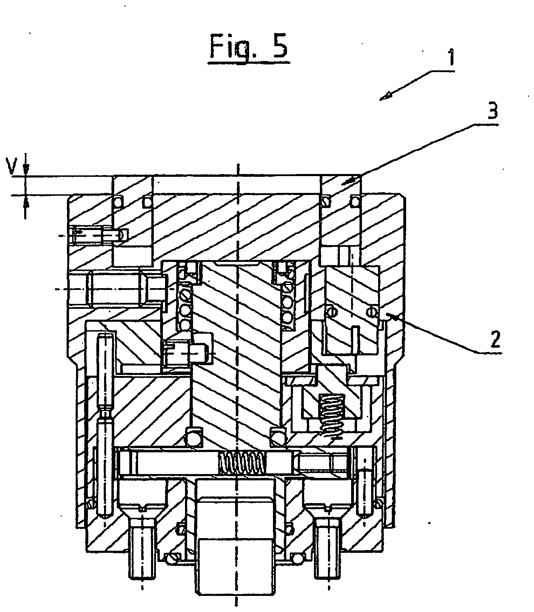

Fig. 5 zeigt den Längsschnitt der Stellvorrichtung 1 gemäß Fig. 4 mit einem positiven Versatz V, das heißt in einer ausgefahrenen Position. Die Anzeigemittel 3 sind dabei relativ zu der Stellkappeneinrichtung 2 ausgefahren, so dass jeweils die oberen äußeren Oberflächen einen Versatz V zueinander bilden.

Die Funktionsweise der Stellvorrichtung 1 gemäß Fig. 4 und 5 ist die Folgende:

Bei der Erfindung (Fig. 4, 5) ist an der Unterseite der Stellkappeneinrichtung 2, das heißt der Seite, welche entgegengesetzt zu den Anzeigemitteln 3 weist, eine Rastscheibe angeordnet. Diese Rastscheibe ist in mit einer vorgegebenen Anzahl an als Ausfräsungen ausgebildeten Rastmitteln in vordefinierten Abständen zueinander ausgebildet. Die Abstände sind bevorzugt äquidistant. Die Stellkappeneinrichtung 2 wird durch ein als Druckfeder ausgebildetes Vorspannelement in Richtung Koppelteil gedrückt. Eine zu der Rastscheibe korrespondierende Rasthülse, die sich unterhalb der Rastscheibe befindet, wird durch ein als Druckfeder ausgebildetes Vorspannelement von unten, das heißt in Richtung Anzeigemittel 3 gegen die Rastscheibe gedrückt. Diese zweite Druckfeder ist etwas schwächer als die erste Druckfeder, welche die Rastscheibe nach unten drückt, ausgebildet, so dass die Stellkappeneinrichtung 2 in der unteren Stellung verbleibt. Die zylindrische Rasthülse weist an ihrem oberen Ende eine plane Oberfläche auf. Wird nun die Stellkappeneinrichtung 3 so verdreht, dass eine der Ausfräsungen genau über der Rasthülse zu liegen kommt, schiebt sich die Rasthülse in diese Ausfräsung, so dass die Stellvorrichtung 1 arretiert bzw. eingerastet ist. Um nun diese Arretierung zu lösen, muss die Stellkappeneinrichtung 2 gegen den Druck der ersten Druckfeder nach oben gezogen und weitergedreht werden. Nach dem Weiterdrehen der Stellkappeneinrichtung 2 um eine Rasterung der ersten Rasteinrichtung, oder kurz um einen Klick, kann die Stellkappeneinrichtung 2 losgelassen werden, ohne dass diese einrastet. Die Ausfräsungen befinden sich nicht mehr genau über der Rasthülse, wodurch die Rasthülse wieder gegen die zweite Druckfeder nach unten gedrückt wird. Der Vorgang wiederholt sich, wenn die Stellkappeneinrichtung 2 weitergedreht wird und eine weitere Ausfräsung die Rasthülse erreich.

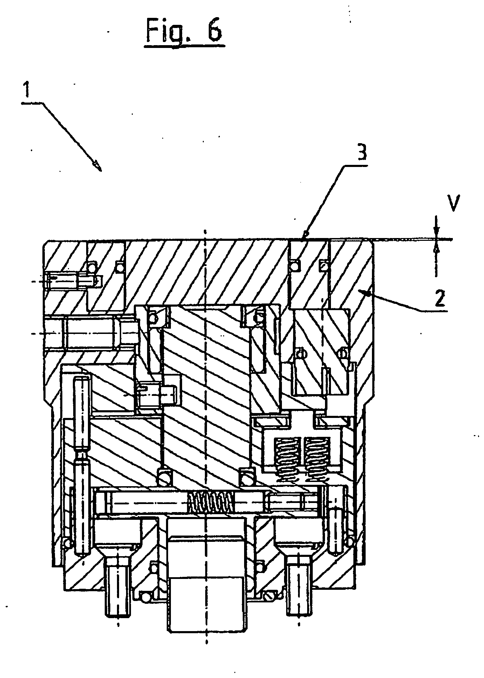

Fig. 6 zeigt einen Längsschnitt in axialer Richtung durch die Stellvorrichtung 1. Fig. 6 unterscheidet sich im Wesentlichen von den Fig. 2 und Fig. 4 durch die unterschiedliche Ausbildung der zweiten Rasteinrichtung 7. Die Rasteinrichtung 7 umfasst eine Rastscheibe und eine Rasthülse. Beide, Rastscheibe und Rasthülse weisen miteinander zusammenwirkende, korrespondierende Rastmittel auf. Die Rastmittel sind bei der Rasthülse als aus zwei Schrägen gebildete Spitze(n) ausgebildet. Die Rastmittel der Rastscheibe sind als korrespondierende Ausnehmung(en) ausgebildet, welche die Rastmittel der Rasthülse aufnimmt. Die Stellvorrichtung 1 ist in einer Position dargestellt, in welcher der Versatz zwischen Anzeigemittel 3 und Stellkappeneinrichtung 2 etwa null ist, das heißt, das beide äußere, obere Oberflächen, die des als ringförmiges Element ausgebildeten Anzeigemittels 3 und die der Stellkappeneinrichtung 2, etwa bündig zueinander ausgerichtet sind.

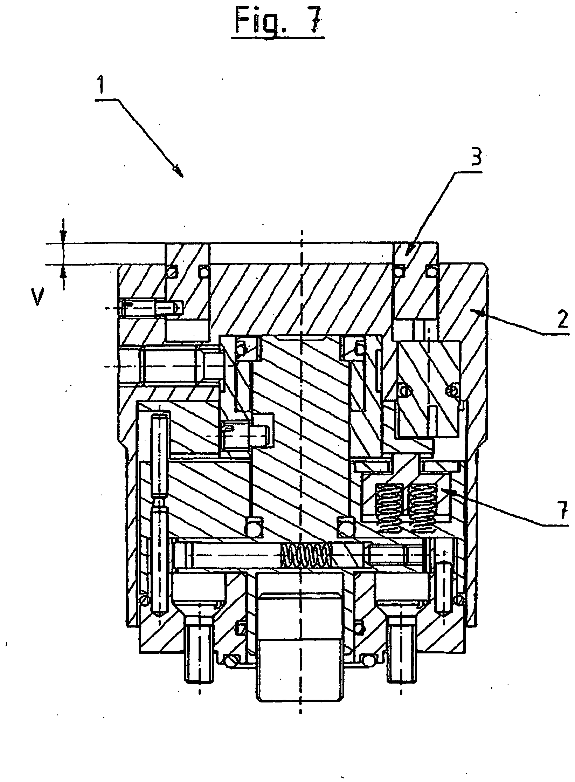

Fig. 7 zeigt den Längsschnitt gemäß Fig. 6 mit einem Versatz V > null. Der Versatz V der Stellvorrichtung 1 bzw. zwischen der Stellkappeneinrichtung 2 und dem Anzeigemittel 3 ist von null verschieden, das heißt das Anzeigemittel 3 ist in einer ausgefahrenen Position, welche durch den Bediener auch bei Dunkelheit ertastbar ist.

Bei einer alternativen Stellvorrichtung ist an der Unterseite der Stellkappeneinrichtung 2 eine Rastscheibe ausgebildet. Diese Rastscheibe ist mit einer bestimmten Anzahl Rastmitteln in einem vorbestimmten Abstand und in einer vorbestimmten Anzahl ausgebildet. Zu dieser Rastscheibe ist eine korrespondierende, mit der Rastscheibe zusammenwirkende Rasthülse ausgebildet. Ein unterer Teil dieser Rasthülse ist mit einer Verdrehsicherung, hier in Form eines rechteckigen Profils ausgebildet. Somit ist gewährleistet, dass die Rasthülse sich nicht verdrehen kann und nur in einer Axialrichtung, das heißt nach oben und unten verschoben werden kann. Ein oder mehrere als Druckfeder(n) ausgebildete Vorspannelemente drücken die Rasthülse nach oben gegen die Rastscheibe. Die Rasthülse weist in ihrem oberen Teil zwei Schrägen auf, welche eine Spitze bilden. Wird nun die Stellkappeneinrichtung 2 so verdreht, dass eine der Rasterungen der Rastscheibe genau über eine der Rasterungen der Rasthülse zu liegen kommt, sind die Rasterungen und das obere Ende der Rasthülse genau zueinander ausgerichtet, was bedeutet, dass die Rasthülse in die Rasterung der Rastscheibe einfährt, das heißt die Rasthülse "klickt" in die Rastscheibe ein. Dieser "Klick" ist deutlich fühlbarer als die "Klicks" der ersten Rasteinrichtung 5 alleine. Um die Stellkappeneinrichtung 2 weiter zu drehen, muss sie mit etwas größerem Kraftaufwand als bei den herkömmlichen, ersten Rasteinrichtungs-"Klicks" gedreht werden, da die Rasthülse hierbei wieder gegen die Druckfeder(n) nach unten geschoben werden muss. Wenn die Stellkappeneinrichtung 2 weitergedreht wird, wiederholt sich der Vorgang bei jedem Erreichen einer weiteren Rasterung der zweiten Rasteinrichtung 7, die mit der ersten Rasterung übereinstimmt.

Die Stellkappeneinrichtung 2 bleibt hierbei stets in der unteren, vorbestimmten Position.

Die Funktionsweise der Anzeigemittel 3 ist nachstehend beschrieben.

Um dem Bediener, Benutzer oder Anwender jederzeit zumindest ertastbar, bei entsprechenden Sichtverhältnissen auch sichtbar anzuzeigen, in welcher Schaltposition die Stellvorrichtung 1 sich befindet, sind Anzeigemittel 3 vorgesehen, welche bevorzugt die Anzahl der verstellten Umdrehungen darstellt. Um die Schaltposition der Stellvorrichtung 1 anzuzeigen, ist ein relativ zu der Stellkappeneinrichtung 2 verstellbares Ringelement vorgesehen, welches je nach dessen Position die entsprechende Schaltposition kenntlich macht. Diese Position können unter anderem sein: bündig mit der Oberseite der Stellkappeneinrichtung 2 abschließend, aus der Stellkappeneinrichtung 2 hervorragende, in die Stellkappeneinrichtung 2 hineinragend.

Im oberen Teil der Stellkappeneinrichtung 2 ist in einer entsprechenden Ausnehmung ein als Umdrehungsring oder allgemeiner ein als ringförmiges Element ausgebildetes Anzeigemittel 3 angeordnet. Der Umdrehungsring ist über mindestens einen Gewindestift mit Zapfen, welche in schräge Nuten am Umfang des ringförmigen Elements gesetzt sind, positioniert. Durch Verdrehen des ringförmigen Elements um die Mittelachse der Stellkappeneinrichtung 2 verschiebt sich dieser in axiale Richtung, das heißt nach oben bzw. unten, relativ zu der Stellkappeneinrichtung 2. Je nach Umdrehung der Stellkappeneinrichtung 2 befindet sich das Anzeigemittel 3 in einer korrespondierenden Position.

Aus dem ringförmigen Element ragt ein zu einer Schalteinrichtung 6 gehörender, als Zylinderstift ausgebildeter Vorsprung hervor. Dieser wirkt mit einem ebenfalls zu der Schalteinrichtung 6 gehörenden Pendelzylinder zusammen. Der Pendelzylinder ist um seine Achse verdrehbar ausgebildet. An dem unteren Teil des Pendelzylinders befindet sich an dessen Unterseite eine Nut. In dem oberen Teil des Pendelzylinders ragt von dessen oberer Stirnseite ein Zylinderstift hervor, dessen Achse parallel und seitlich versetzt, d.h. exzentrisch zur Achse des Pendelzylinders liegt. An der Unterseite des Pendelzylinders ist eine Nut ausgebildet, welche den Zapfen, der von der Oberseite des Pendelzylinders hervorragt, führt. Bei einem Verdrehen der Stellkappeneinrichtung 2 über einen Schaltpunkt hinaus, zum Beispiel bei einer vollen Umdrehung, greift der aus dem ringförmigen Element ragende Zylinderstift in die Nut an der Unterseite des Pendelzylinders ein. Beim Weiterdrehen der Stellkappeneinrichtung 2 verdreht sich der Pendelzylinder, wodurch sich die Position des aus dem Pendelzylinder hervorragenden Zylinderstifts verändert. Dies hat zur Folge, dass sich das ringförmige Element verdreht und sich die geführt durch die schräg verlaufenden Nuten nach oben bzw. nach unten, allgemein axial, verschiebt. Die schrägen Nuten können am Umfang des ringförmigen Elements an unterschiedlichen Positionen für zwei oder mehrere Schaltpositionen ausgebildet werden.

### Bezugszeichenliste

- 1: Stellvorrichtung
- 2: Stellkappeneinrichtung
- 3: Anzeigemittel
- 4: Koppelteil
- 5: erste Rasteinrichtung
- 6: Schalteinrichtung
- 7: zweite Rasteinrichtung

## Patentansprüche

1. Stellvorrichtung (1) zum Einstellen von an die Stellvorrichtung (1) koppelbaren Bauteilen, insbesondere zum Verstellen einer Abseheneinrichtung eines Zielfernrohrs, umfassend: eine drehbar an einem Koppelteil (4) gelagerte Stellkappeneinrichtung (2) zur Betätigung der Stellvorrichtung (1), wobei das Koppelteil (4) ausgebildet ist, um die Bewegung der Stellkappeneinrichtung (2) auf mit dem Koppelteil (4) verbindbare Bauteile zwecks deren Einstellung zu übertragen, mit einer ersten, mit der Stellkappeneinrichtung (2) gekoppelten Rasteinrichtung (5), die erste Rastmittel zur Bildung einer ersten Rasterung aufweist, Anzeigemittel (3) zur Anzeige des Umfangs der Drehung der Stellkappeneinrichtung (2), und eine Schalteinrichtung (6) zum Betätigen der Anzeigemittel (3) nach einem vorbestimmten Ausmaß der Drehung der Stellkappeneinrichtung (2), **dadurch gekennzeichnet, dass** eine zweite, mit der Stellkappeneinrichtung (2) gekoppelte Rasteinrichtung (7) mit einer von der ersten Rasterung unterschiedlichen, mittels zweiter Rastmittel gebildeten zweiten Rasterung vorgesehen ist, wobei die zweite Rasteinrichtung (7) ein erstes Rastelement und ein damit zusammenwirkendes, korrespondierendes zweites Rastelement umfasst, welche ausgebildet sind, um miteinander in Eingriff gebracht zu werden und wobei die zweite Rastvorrichtung (7) zwei mit entgegengesetzt wirkenden Vorspannkräften ausgebildete Vorspannelemente umfasst, um die Rastelemente gegeneinander vorzuspannen.

2. Stellvorrichtung (1) nach Anspruch 1, wobei die Anzeigemittel (3) relativ bewegbar zu der Stellkappeneinrichtung (2) ausgebildet sind und so mit der Schalteinrichtung (6) gekoppelt sind, dass bei einer ersten Schaltstellung der Schalteinrichtung (6) das Anzeigemittel (3) eine erste Position einnimmt und bei einer anderen Schaltstellung der Schalteinrichtung (6) das Anzeigemittel (3) eine andere, ertastbare Position einnimmt.

3. Stellvorrichtung (1) nach den Ansprüchen 1 bis 2, **dadurch gekennzeichnet, dass** das erste Rastelelement eine Rastscheibe ist.

4. Stellvorrichtung (1) nach einem der vorherigen Ansprüche 1 bis 3, **dadurch gekennzeichnet, dass** das zweite Rastelement eine Rasthülse ist.

5. Stellvorrichtung (1) nach einem der vorherigen Ansprüche 1 bis 4, **dadurch gekennzeichnet, dass** die Rastmittel des ersten Rastelements als Ausnehmung und/oder Erhebung und die Rastmittel des zweiten Rastelements als dazu korrespondierende, mit den ersten Rastmittel in Eingriff bringbare Erhebungen und/oder Ausnehmungen ausgebildet sind.

6. Stellvorrichtung (1) nach einem der vorherigen Ansprüche 1 bis 5, **dadurch gekennzeichnet, dass** die die Rastmittel des zweiten Rastelements als kugelförmige Erhebungen ausgebildet sind und die Rastmittel des dazu korrespondierenden ersten Rastelements als kugelförmige Ausnehmungen ausgebildet sind.

7. Stellvorrichtung (1) nach Anspruch 6, **dadurch gekennzeichnet, dass** der Durchmesser der kugelförmigen Erhebung größer ist als der Durchmesser der kugelförmigen Ausnehmung.

8. Stellvorrichtung (1) nach einem der vorherigen Ansprüche 1 bis 7, **dadurch gekennzeichnet, dass** das Verhältnis der ersten Rasterung zu der zweiten Rasterung ausgewählt ist aus der Gruppe umfassend die Verhältnisse: 1:2, 1:5, 1:10, 1:20, 1:25, 1:50, 1:100, 1:125, 1:150, 1:200, 1:250, 1:500, 1:750, 1:1000, 1:1250, 1:1500, 1:2000, 1:2500, 1:5000, 1:7500, 1:10000.

9. Stellvorrichtung (1) nach Anspruch 11, **dadurch gekennzeichnet, dass** die Vorspannelemente mit unterschiedlichen Vorspannkräften ausgebildet sind.

10. Stellvorrichtung (1) nach einem der vorherigen Ansprüche 1 bis 9, **dadurch gekennzeichnet, dass** die zweite Rasteinrichtung (7) weiter ein in und/oder entgegengesetzt einer Wirkrichtung des Vorspannelements verschiebbares Koppelstück aufweist, das zwischen einem Rastelement und der Stellkappeneinrichtung (2) angeordnet ist.

11. Stellvorrichtung (1) nach einem der Ansprüche1 bis 9, **dadurch gekennzeichnet, dass** das Vorspannelement mit der größeren Vorspannungskraft zwischen Koppelstück und dem dazu benachbarten Rastelement angeordnet ist.

12. Zielfernrohr mit einer Stellvorrichtung (1) nach einem der vorherigen Ansprüche 1 bis 11, mit einem Rohrgehäuse, das Tubusfassungen für ein Okular- und ein Objektivsystem sowie ein optisches Umkehrsystem und ein in diesem zugeordnetes Absehen aufweist.

13. Verfahren zum Einstellen von an eine Stellvorrichtung (1) gemäß einem der vorherigen Ansprüche 1 bis 11 gekoppelte Bauteile über die Stellvorrichtung (1), umfassend die Schritte:
Feineinstellen der Stellvorrichtung (1) anhand des ertastbaren Feedbacks der ersten Rasteinrichtung,
Grobeinstellen der Stellvorrichtung (1) anhand des ertastbaren Feedbacks der zweiten Rasteinrichtung (7),
wobei die Schritte auch in umgekehrter Reihenfolge durchgeführt werden können.

14. Verfahren nach Anspruch 13, weiter umfassend den Schritt:
Überprüfen der Position der Stellvorrichtung (1) anhand von Anzeigemitteln (3) gemäß einem der vorherigen Ansprüche 1 bis 11, wobei das Überprüfen jederzeit während des Verfahrens durchgeführt werden kann.

## Claims

1. Adjusting device (1) to adjust components coupleable to the adjusting device {1), especially to regulate the reticule mechanism of a telescope, comprising: a regulating cap appliance (2) arranged rotatable at a coupling part (4) to operate the adjusting device (1), with the coupling part (4) being formed to transfer the movement of the regulating cap appliance (2) to components connectable to the coupling part (4) for their being adjusted, with a first click-stop appliance (5) coupled to the regulating cap appliance (2) and showing first catching means to form a first catch, indicator means (3) to indicate the range of the rotation of the regulating cap appliance (2), and an indexing mechanism (6) to operate the indicator means (3) according to a preset extent of rotation of the regulating cap appliance (2),
**characterized in that**
coupled to the regulating cap appliance (2) a second click-stop appliance (7) of a second catch formed by second catching means different from the first catch is provided, wherein the second click-stop appliance (7) comprises a first catch element and a corresponding second catch element cooperating therewith, which are formed so as to be brought into engagement with each other, and wherein the second clip-stop appliance (7) comprises two tensioning elements designed having oppositely acting tensioning forces, so as to tension the catch elements against each other.

2. Adjusting device (1) according to claim 1, with the indicator means (3) being formed moveable relative to the regulating cap appliance (2) and coupled to the indexing mechanism (6) such that at a first indexing position of the indexing mechanism (6) the indicator means (3) is in a first position, and at a different indexing position of the indexing mechanism (6) the indicator means (3) is in a different, palpable position.

3. Adjusting device (1) according to claims 1 and 2, **characterized in that** the first click-stop element is a star wheel.

4. Adjusting device (1) according to one of the preceding claims 1 to 3, **characterized in that** the second click-stop element is a snap-in bush.

5. Adjusting device (1) according to one of the preceding claims 1 to 4, **characterized in that** the catching means of the first click-stop element are formed as a recess and/or elevation and the catching means of the second click- stop element as their corresponding elevations and/or recesses to engage into the first catching means.

6. Adjusting device (1) according to one of the preceding claims 1 to 5, **characterized in that** the catching means of the second click-stop element are shaped as spherical elevations and the catching means of the corresponding first click-stop element are formed as spherical recesses.

7. Adjusting device (1) according to claim 6, **characterized in that** the diameter of the spherical elevation is larger than the diameter of the spherical recess.

8. Adjusting device (1) according to one of the preceding claims 1 to 7, **characterized in that** the ratio of the first catch to the second catch is chosen from the group comprising the ratios of: 1:2, 1.5, 1:10; 1:20, 1:25, 1:50, 1:100, 1:125; 1:150; 1.200, 1:250, 1:500, 1:750, 1.1000, 1:1250, 1:1500, 1:2000, 1.2500, 1:5000, 1:7500, 1:10000.

9. Adjusting device (1) according to claim 1, **characterized in that** the prestress elements are equipped with different prestress forces.

10. Adjusting device (9) according to one of the preceding claims 1 to 9, **characterized in that**
the second click-stop appliance (7) has further a coupling piece slidable in and/or opposite an effective direction of the prestress element and that is arranged between a click-stop element and the regulating cap appliance (2).

11. Adjusting device (1) according to one of claims 1 to 9, **characterized in that** the prestress element with the greater prestress force is arranged between coupling piece and the click-stop element adjacent to it.

12. Telescope with an adjusting device (1) according to one of the preceding claims 1 to 11 that has a tubular casing with tube mountings for an ocular and lens system, as well as an optical inversion system and a reticule associated to it.

13. Process to adjust components coupled to an adjusting device (1) according to one of the preceding claims 1 to 11, by such adjusting device (1), comprising the following steps:
fine adjustment of the adjusting device (1) by the palpable feedback of the first click-stop appliance,
coarse adjustment of the adjusting device 2) by the palpable feedback of the second click-stop appliance (7),
with these steps being also executable reversed in order.

14. Process according to claim 13, further comprising the step:
control of the position of the adjusting device (1) by indicator means (3) according to one of the preceding claims 1 to 11, with such control being executable at any time during the process.

## Revendications

1. Appareil de réglage (1) pour ajuster des composants qui peuvent être couplés à l'appareil de réglage (1), particulièrement pour régler le mécanisme de réticule d'une lunette de pointage, comprenant :
un dispositif capot de réglage (2) logé de manière tournante à un élément de couplage (4) pour opérer l'appareil de réglage (1),
l'élément de couplage (4) étant formé pour transférer le mouvement du dispositif capot de réglage (2) à des composants qui peuvent être couplés à l'élément de couplage (4) pour ajuster ceux-ci,
avec un premier dispositif de crantage (5) couplé au dispositif capot de réglage (2), ayant des premiers moyens d'arrêt pour former un premier crantage,
des moyens indicateurs (3) pour indiquer l'ampleur de la rotation du dispositif capot de réglage (2),
et un mécanisme d'indexation (6) pour opérer les moyens indicateurs (3) selon une étendue prédéterminée de la rotation du dispositif capot de réglage (2),
**caractérisé en ce que**
un deuxième dispositif de crantage (7) couplé au dispositif capot de réglage (2) est prévu, avec un deuxième crantage formé par des deuxièmes moyens d'arrêt différents du premier crantage, dans lequel le deuxième dispositif de crantage (7) contient un premier élément de crantage et un deuxième élément de crantage concourant et correspondant avec ce premier, et qui sont formés pour être mis en prise, et dans lequel le deuxième dispositif de crantage (7) comprend deux éléments de prétension de forces de prétension agissant en sens inverse pour précontraindre les éléments de crantage l'un contre l'autre.

2. Appareil de réglage (1) selon la revendication 1, avec les moyens indicateurs (3) formés de manière amovible relativement au dispositif capot de réglage (2) et couplés au mécanisme d'indexation (6) tel que, à une première position d'indexation du mécanisme d'indexation (6), le moyen indicateur (3) prend une première position et qu'à une autre position d'indexation du mécanisme d'indexation (6) le moyen indicateur (3) est dans une position différente et palpable.

3. Appareil de réglage (1) selon les revendications 1 et 2, **caractérisé en ce que** le premier élément de crantage est un disque à crans.

4. Appareil de réglage (1) selon une des précédentes revendications 1 à 3, **caractérisé en ce que** le deuxième élément de crantage est une douille d'arrêt.

5. Appareil de réglage (1) selon une des précédentes revendications 1 à 4, **caractérisé en ce que** les moyens d'arrêt du premier élément de crantage sont formés comme un creux et/ou une élévation, et les moyens d'arrêt du deuxième élément de crantage comme leurs élévations et/ou creux correspondant(e)s pour être mis en prise avec les premiers moyens d'arrêt.

6. Appareil de réglage (1) selon une des précédentes revendications 1 à 5, **caractérisé en ce que** les moyens d'arrêt du deuxième élément de crantage sont formés comme des élévations sphériques et les moyens d'arrêt du premier élément de crantage correspondant comme des creux sphériques.

7. Appareil de réglage (1) selon la revendication 6, **caractérisé en ce que** le diamètre de l'élévation sphérique est plus grand que le diamètre du ceux sphérique.

8. Appareil de réglage (1) selon une des précédentes revendications 1 à 7, **caractérisé en ce que** le rapport du premier crantage avec le deuxième crantage est choisi de la fonction comprenant les rapports : 1:2, 1:5, 1:10, 1:20, 1 :25, 1:50, 1 :100, 1:125, 1 :150, 1:200, 1 :250, 1 :500, 1 :750, 1:1000, 1:1250, 1 :1500, 1 :2000, 1 :2500, 1 :5000, 1 :7500, 1 :1000.

9. Appareil de réglage (1) selon la revendication 1, **caractérisé en ce que** les éléments de prétension sont munis de forces de prétension différentes.

10. Appareil de réglage (1) selon une des précédentes revendications 1 à 9, **caractérisé en ce que** le deuxième dispositif de crantage (7) a en plus une pièce de couplage décalable vers et/ou inverse à une direction effective de l'élément de prétension, et qui est arrangé entre un élément de crantage et le dispositif capot de réglage (2).

11. Appareil de réglage (1) selon une des revendications 1 à 9, **caractérisé en ce que** l'élément de prétension de la plus grande force de prétension est arrangé entre la pièce de couplage et l'élément de crantage l'avoisinant.

12. Lunette de pointage avec un appareil de réglage (1) selon une des précédentes revendications 1 à 11, avec une boîte tubulaire ayant des montures tubulaires pour un système oculaire et d'objectifs, ainsi qu'un système d'inversion optique et un réticule conjuguant.

13. Procédé pour ajuster des composants couplés à un appareil de réglage (1) selon une des précédentes revendications 1 à 11 par cet appareil de réglage (1) comprenant les étapes suivantes :
mise au point fine de l'appareil de réglage (1) par la réaction palpable du premier dispositif de crantage,
mise au point approximative de l'appareil de réglage (1) par la réaction palpable du deuxième dispositif de crantage,
en permettant aussi l'opération de ces étapes dans l'ordre inverse.

14. Procédé selon la revendication 13, comprenant en plus l'étape de :
contrôle de la position de l'appareil de réglage (1) par des moyens indicateurs (3) selon une des précédentes revendications 1 à 11, un tel contrôle étant opérable à chaque moment pendant le procédé.
